# EUROPÄISCHE PATENTSCHRIFT

(11) **EP 3 463 001 B1**
(45) Veröffentlichungstag und Bekanntmachung des Hinweises auf die Patenterteilung: **24.03.2021**
(21) Anmeldenummer: 17743380.2
(22) Anmeldetag: 06.06.2017
(51) Int. Cl.: A47J 27/00, A47J 36/02

(54) **KOCHGESCHIRR**
COOKING UTENSIL
GAMELLE

(30) Priorität: 06.06.2016 CH 7182016
(43) Veröffentlichungstag der Anmeldung: 10.04.2019
(73) Patentinhaber: Condeco Technologies AG, 4054 Basel (CH)
(72) Erfinder: MARAVIC, Dusko, 4053 Basel (CH)
(74) Vertreter: Buntz, Gerhard
(86) Internationale Anmeldenummer: PCT/IB2017/000715
(87) Internationale Veröffentlichungsnummer: WO 2017/212330

(56) Entgegenhaltungen:
- EP-A1- 0 922 424
- DE-A1- 2 453 169
- FR-A1- 2 361 850
- US-A1- 2009 065 500
- US-A1- 2015 153 049

## Beschreibung

Die Erfindung betrifft ein Kochgeschirr gemäss dem Oberbegriff des Anspruchs 1 und ein Verfahren zu seiner Herstellung.

Heute werden die meisten Kochgeschirre aus rostfreiem Edelstahl mit einem sog. Sandwich-Boden versehen. Die Techniken die man dazu verwendet, führen ausschliesslich über eine Stoffschlüssige Verbindung, welche meistens entweder durch Löten oder sog. "Schlagen" erfolgt. In beiden Fällen müssen recht hohe Temperaturen erzielt werden, damit eine sichere Verbindung entstehen kann. In der Regel besteht ein Sandwich-Boden aus einer Aluminium-Scheibe und einer sog. Kapsel, die miteinander durch eines der o. g. Verfahren verbunden werden. Mit anderen Worten werden die kontaktierenden Flächen durch einen sog. "Vermittler" verbunden. Im Falle des Lötens ist dieser "Vermittler" das geeignete Lot und im Falle der Verbindung durch das sog. Schlagen" sind es die atomaren Bindekräfte, welche die beiden Materialien zusammenhalten. Für das Erreichen eines Sandwich-Bodens wird heute ein verhältnismässig hoher Energieverbrauch (um 0,1 kWh) benötigt.

Aus EP 0 922 424 und US 2015/153049 sind Kochgeschirre bekannt, die aus einem Aussen- und einem Innentopf bestehen und in deren Bodenbereich eine Wärmeverteilplatte angeordnet ist, die an der Unterseite des Innentopfes befestigt ist. Die Wärmeverteilplatte ist aber nicht in Berührung mit dem Bodenbereich des Aussentopfes.

US2009/065500 zeigt verschiedene Versionen eines Kochgeschirrs, wobei sich bei keiner Version eine Bodenplatte mit dem Bodenbereich des Aussen- und Innentopfes in Berührung befindet.

Aus DE 24 53 169 und FR 2 361 850 sind Kochgefässe mit einem Aussen- und einem Innentopf, sowie einer oder mehreren im Bodenbereich dazwischen angeordneten wärmeleitenden Platten bekannt, die mit dem Innentopf stoffschlüssig verbunden sind.

Der Erfindung liegt die Aufgabe zugrunde, ein Kochgeschirr mit einer besseren Bodenkonstruktion und ein Verfahren zu dessen Herstellung zu finden.

Erfindungsgemäss wird diese Aufgabe gelöst durch die kennzeichnenden Merkmale der Ansprüche 1, 7 und 8.

Im Folgenden werden anhand der beiliegenden Zeichnungen bevorzugte Ausführungsbeispiele der Erfindung beschrieben. Es zeigen:
Fig. 1 eine schematische Schnittdarstellung eines Kochgeschirrs nach der Erfindung,
Fig.2 eine schematische Schnittdarstellung einer alternativen Ausführungsform,
Fig. 3 eine Ausführungsform mit Mitteln für eine Temperaturreglung,
Fig. 4 eine schematische Schnittdarstellung einer weiteren alternativen Ausführungsform,
Fig. 5 eine weitere Ausführungsform mit Mitteln für eine Temperaturreglung,
Fig. 6 eine Ausführungsform mit einer elektromagnetischen Abschirmung,
Fig. 7a/b Detailvarianten der in Fig. 6 gezeigten Abschirmung.

Das wichtigste Merkmal des erfindungsgemässen Kochgeschirrs ist die Rolle des Vakuums bei der gleichzeitigen Realisation des Kochgeschirrbodens und der Kochgeschirrwandung. Durch das Wirken des Vakuums werden alle Bestandteile des Kochgeschirrbodens zusammengehalten. Gleichzeitig wirkt das Vakuum in einer Doppelwand des Kochgeschirrs. Der so entstandene Boden ist besonders effizient beim Wärmetransport in das Innere des Kochgeschirrs, z. B. an das Wasser. Andererseits bewirkt die Doppelwand eine äusserst effiziente Wärmedämmung, sprich die Wärmeabgabe des Kochgeschirrs an die Umgebungsluft wird so weit minimiert, dass man fast gleiche wärmetechnische Verhältnisse wie bei einer sog. Thermosflasche erreichen kann. Die Gleichzeitigkeit der Wirkung des Vakuums macht das erfindungsgemässe Kochgeschirr kosten- und produktionsseitig besonders attraktiv.

Eine weitere Eigenschaft des Kochgeschirrs liegt in der Möglichkeit, die zu einer temperaturgeführten Regelung beim Kochen führt. In der Wandung des Kochgeschirrs kann man die miniaturisierte Elektronik mit geeigneten Temperatursensoren unterbringen und die Messwerte drahtlos an einen mit der Wärmequelle verbundenen Regler senden. Die heutige Technik kann eine Regelung nicht anbieten. Sie bedient sich einer einfachen Steuerung und versucht die Kochprozesse so gut wie möglich zu simulieren. Am besten kann man sich den Unterschied zwischen der Regelung und der Steuerung dadurch vorstellen, dass man bei der Regelung ein Temperaturniveau des Kochgutes vorgibt und dieses dann nach Erreichen des Wertes hält. Die Steuerung ist eine Lösung die ohne menschliche Hilfe nicht funktioniert. Will man einen Kochprozess aufrechterhalten, dann wählt man durch Verändern der Leistungsstufen, z. B. von 1-10, diejenige aus, die sich am besten eignet. Bei jeder Beeinflussung von aussen ist eine erneute Einstellung nötig. Kochen ist heute stets durch das Herantasten an das, was man für richtig hält, gekennzeichnet. Jeder falsche Umgang beim Kochen wird gleich bestraft, zu viel Wärme, sprich Wasserdampf kostet Geld und macht das Kochen energetisch ziemlich ineffizient. Dies könnte durch die Möglichkeit einer Regelung ersetzt werden. Ein energieeffizientes Kochen ist nur durch eine temperaturgeführte Regelung des Kochgutes möglich.

Um das erfindungsgemässe Kochgeschirr herstellen zu können, braucht es eine Umstellung im Produktionsablauf. Die Produktionsschritte eines konventionellen Betriebs laufen normalerweise wie folgt ab: Tiefziehen, Abkanten, Reinigen, Vorbereitung für Bodenverbindung, Bodenverbindung, Kontrolle der Bodenverbindung mit evtl. Nachbesserung, mechanische Bearbeitung (Schleifen und Polieren), Anbringen der Handgriffe, Reinigen und Verpacken. Alle diese technologischen Schritte sind auch bei der Herstellung des erfindungsgemässen Kochgeschirrs vorzufinden, allerdings in einer etwas veränderten Reihenfolge und einem reduzierten Ablauf.

Um ein erfindungsgemässes Kochgeschirr herstellen zu können muss man zwei Rohlinge tiefziehen, einer mit kleinerem Durchmesser und einer mit grösserem Durchmesser. Danach folgt das Abkanten und Reinigen. Diese Produktionsschritte bleiben in Bezug auf die Reihenfolge unverändert. Als nächster Schritt folgt die Zusammenstellung des Kochgeschirrs. In den grösseren, äusseren Rumpf werden eine oder mehrere Rundscheiben hineingelegt. Danach erfolgt das Einsetzen des kleineren, inneren Rumpfes. Der nächste Schritt ist die Verbindung der Rümpfe. Sie erfolgt vorzugsweise in einer Vakuumkammer mit anschliessender Verschweissung des Giessrands beider Rümpfe. Das Ziel dabei ist es, ein Vakuum im Raum zwischen den beiden Rümpfen zu erzeugen. Bei der Entnahme aus der Vakuumkammer werden die Bodenteile beim "Eintritt" in die Atmosphäre aneinander gepresst, so dass eine gute Verbindung aller Kontaktflächen erfolgt. Die Geschirrwandung ist genügend stark, um der mechanischen Verformung infolge wirkender Druckkräfte, stand zu halten. In der Regel sollten sich die Geschirrwände nicht berühren. Sollte dies jedoch eintreten, mindert dies die Qualität des Kochgeschirrs nicht.
Das Vakuum, von dem hier die Rede ist, bezeichnet man als Grobvakuum, wie man es in der Branche kennt. Grösseres Vakuum als wenige mbar braucht es nicht.

Die restlichen Produktionsschritte laufen, wie bei der konventioneller Herstellung, unverändert ab.

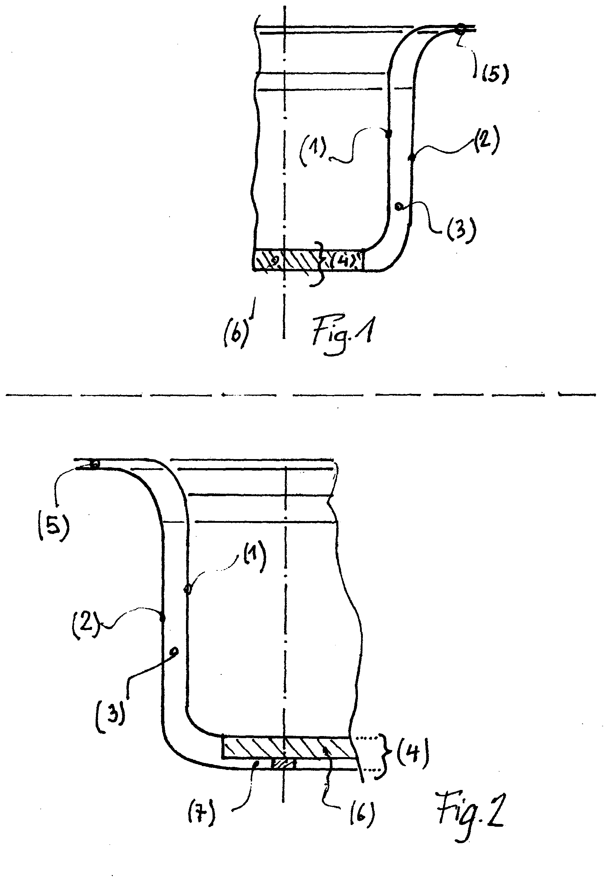

Wie in Fig. 1 gezeigt, besteht das erfindungsgemässe Kochgeschirr aus zwei Rümpfen, Innenrumpf 1 und Aussenrumpf 2 wobei unter Rumpf ein tiefgezogener Rohling in Form eines Topfes verstanden wird. Im ganzen Zwischenraum 3 zwischen den beiden Rümpfen herrscht Vakuum. Vorzugsweise sollten die Rumpfdurchmesser denen, die der geltenden Norm entsprechen. Damit wären Investitionskosten in die Tiefzieh-Werkzeuge nicht nötig.

Beim erfindungsgemässen Kochgeschirr werden nur die Giessränder 5 stoffschlüssig miteinander verbunden, z. B. durch Verschweissen und im Zwischenraum 3 herrscht Vakuum.

Die Art der stoffschlüssigen Verbindung spielt dabei eine untergeordnete Rolle. Nachdem im Raum 3 zwischen den Rümpfen 1 und 2 ein ausreichendes Vakuum erreicht worden ist, können die Giess-ränder 5 miteinander verbunden werden. Dafür stehen diverse Verfahren wie Laserschweissen, Elektronenstrahlschweissen, Elektrowiderstandsschweissen, Löten, elektromagnetisches Pulsschweissen, u. v. a. stoffschlüssige Fügeverfahren zur Verfügung. Von allen diesen Fügeverfahren wird erwartet, dass nach Verschweissen das Vakuum in Raum 3 in der Doppelwand nicht verloren geht und für sehr lange Zeit bestehen bleibt. Ein Fügeverfahren wie die elektromagnetische Pulstechnologie sollte aus Kostengründen vorzugsweise verwendet werden, da die Energiekosten bei diesem Fügeprozess weniger als den Bruchteil eines Euro-Cents betragen.

In Bodenbereich werden die Flächen infolge vakuumbedingter Druckkräfte aneinander gedrückt. Die eine oder mehrere im Boden 4 befindliche Boden-Rundscheiben 6 können sich infolge Erwärmung radial frei bewegen, weil sie mit dem Bodenteil der beiden Rümpfe nicht stoffschlüssig verbunden sind. Diese Tatsache trägt bedeutend dazu bei, dass sich der Boden 4 insgesamt weniger verformt, als wenn die Teile allesamt fest, also stoffschlüssig, miteinander verbunden wären. Durch das Vakuum in der Doppelwand wird gewährleistet, dass auch noch der Wärmeverlust des Kochgeschirrs geringer wird.

Technologisch und kostenmässig betrachtet erfolgt die Bodenverbindung wesentlich einfacher und ist bedeutend billiger als herkömmliche Methoden. Da dieser Schritt ein reiner kalter Vorgang ist, wird die anschliessende mechanische Behandlung ebenfalls billiger. Die Oberflächenbearbeitung reduziert sich lediglich auf das Polieren. Das aufwändige Schleifen von anlassbedingt gefärbten Böden 4 entfällt. Wenn man den fast 500 °C heissen Geschirrboden in einem Wasserbad prompt abkühlt, entsteht eine dünne harte Schicht, die mit erhöhtem Aufwand abgetragen werden muss. Bei der erfindungsgemässen Lösung erübrigt sich diese aufwändige mechanische Bodenbearbeitung.

Das erfindungsgemässe Kochgeschirr, wie zuvor beschrieben eignet sich für die Anwendung mit allen denkbaren Wärmequellen, angefangen mit Induktion, Strahlung, Halogen, Massenkochplatten bis Kochen mit Gas oder gar auf dem offenen Feuer. In diesem Sinne kann man von einem universell einsetzbaren Kochgeschirr sprechen. In der Branche sagt man dazu, ein Allherd-Kochgeschirr.

Gesamthaft betrachtet ist die erfindungsgemässe Lösung energieeffizienter als die mit einen konventionellen Boden. Insbesondere werden die heute recht hohen Kosten für die Bodengestaltung verringert. Eine verhältnismässig kleine Vakuumkammer mit z. B. Laser, benötigt wesentlich weniger Energie, um den Boden 4 zu realisieren. Nicht zu unterschätzen ist die Tatsache, dass das Vakuum in Doppelwand nicht zusätzlich bereitet werden muss. Das Vakuum ermöglicht gleichzeitig die Realisation des Bodens 4 und seine Präsenz in Raum 3. Mit dem Vakuum werden also in einem Produktionsschritt zwei Aufgaben realisiert, was zeitliche und kostenmässige Vorteile mit sich bringt.

Anstelle des Zusammenbaus in einer Vakuumkammer ist es auch möglich, nach dem Zusammenbau ein Vakuum in den Zwischenräumen zu erzeugen. Zu diesem Zweck wird an einer stelle der Wandung eine Bohrung vorgesehen, durch die die Luft in den Zwischenräumen abgesaugt wird und die danach vakuumdicht verschlossen wird.

Dadurch, dass die Bodenverbindungen durch das Vakuum realisiert werden, kann man eine Vielzahl von verschiedenen Materialien verwenden, auch solche, die man konventionell nicht stoffschlüssig verbinden kann. Dazu zählen verschiedene Verbundwerkstoffe, Graphit und Graphit-Verbundwerkstoffe, geeignete keramische Werkstoffe sowie verschiedene Metalle, welche aus diesem oder jenem Grund nicht stoffschlüssig verbunden werden können.

Vorzugsweise werden solche Materialien als Boden-Rundscheiben 6 verwendet, welche einen guten Wärmetransport in das Innere des Kochgeschirrs ermöglichen.

Im Extremfall, bei dem die Bodenplatte infolge hoher Temperatur schmelzen könnte, z. B. Aluminium, verhindert die Konstruktion, sprich der Aussenmantel des Kochgeschirrs, dass die Schmelze nach Aussen gelangt. Damit sind eventuellen Folgenschäden eines solchen Unfalls weitgehend minimiert.

Die Vorteile der erfindungsgemässen Lösung liegen nicht nur im Bereich der Produktion, z. B. durch geringere Herstellungszeit und -kosten, sondern auch in ihren anwendungsspezifischen Eigenschaften. Das Kochgeschirr ist energieeffizienter als das konventionelle Kochgeschirr. Es zeichnet sich aus durch kürzere Ankochzeit und geringere Glaskeramiktemperaturen wenn man es mit Strahlungsheizung verwendet. Bei Induktion ist es wesentlich weniger laut und verursacht viel geringere elektromagnetische Streustrahlung, die bekanntlich für den Menschen schädlich ist. Durch die Wahl der geeigneten Werkstoffe für die Bodenplatten, z.B. Aluminium, Kupfer, Graphit und andere Materialien, kann eine sehr gute Temperaturverteilung im Boden des Kochgeschirrs erzielt werden, ungeachtet dessen, mit welcher Wärmequelle geheizt wird.

Das erfindungsgemässe Kochgeschirr kann auch in Kombination mit dem neuen sog. Conduction-Kochsystem verwendet werden.

Dabei sollte vorzugsweise die Bodenplatte aus Kupfer oder einer Kupfer-Legierung sein, um eine hervorragende Temperaturverteilung im Boden erzielen zu können.

Der konstruktive Aufbau der erfindergemässen Lösung erlaubt die Verwendung verschiedener Materialien sowohl für den Aussenrumpf 2 als auch für den Innenrumpf 1. Diese Materialien müssen allerdings geeignet sein, um tiefgezogen werden zu können. Bei den Materialien für den Innenrumpf 1 wird im Gegensatz bei solchen für den Aussenrumpf 2, zusätzlich eine Lebensmittelverträglichkeit verlangt. Das ist eine wichtige Voraussetzung, um die Bedingungen der geltenden Kochgeschirrnorm EN 12983-2 erfüllen zu können. Vorzugsweise werden für die Innenrümpfe 1 Edelstahl, Aluminium, Titan usw. verwendet. Als Materialien für die Aussenrümpfe 2 werden Edelstahl, Aluminium, Titan, Kupfer und Kupfer-Legierungen, Glas, geeignete keramischen Werkstoffe und Kunststoffe, sowie geeignete Verbundwerkstoffe, verwendet.

Für den Fall, dass die Rümpfe 1 und 2 aus verschiedenen Materialien im Giessrandbereich nicht stoffschlüssig miteinander verbunden werden können, werden sie anderweitig miteinander zusammengefügt. Die Art dieser Verbindung spielt eine untergeordnete Rolle, es muss allerdings das Vakuums für lange Zeit aufrechterhalten werden.

Bei der in Fig. 2 dargestellten Ausführungsform ist unterhalb der Bodenplatte 6 ein Boden-Zwischenraum 7 vorgesehen, in dem ebenfalls Vakuum herrscht. Die Präsenz des Vakuums im Bodenbereich verhindert den Wärmeaustausch zwischen dem wärmeren Innenrumpf 1 und dem kälteren Aussenrumpf 2. Da die induktive Wärme in dem induktionstauglichen Innenrumpf 1 entsteht, kann sie nicht nach aussen fliessen, da der Bodenzwischenraum 7 auch unter Vakuum steht. Im energetischen Sinne ist so etwas äusserst positiv und macht das Kochgeschirr besonders energieeffizient. Allerdings ist dieses Kochgeschirr nicht allherd- sondern nur induktionstauglich ist. Angesichts der hohen und zunehmend grösseren Marktpräsenz der Induktion, ist dies kein Nachteil.

Das erfindungsgemässe Kochgeschirr, nach Fig. 2, also das Kochgeschirr welches nur mit Induktion benutzt werden kann, erreicht gegenüber einer Allherdversion gemäss Fig. 1, eine noch höhere Energieeffizienz und kürzere Ankochzeit. Die Physik, welche dahinter steht, ist leicht zu verstehen: die Glaskeramik wird viel weniger warm, und die Wärmeverluste des Bodens werden geringer. Die induktiv erzeugte Wärmemenge fliesst fast ausschliesslich zu dem "Abnehmer" im Kochtopf (Kochgut, Wasser, Öl, usw.) und nicht dorthin, wo sie nicht benötigt wird.

Ein ähnlicher Effekt wird auch erzielt, wenn der Raum 7 im Bodenbereich 4 mit einem Thermoisolationsmaterial ausgefüllt wird.

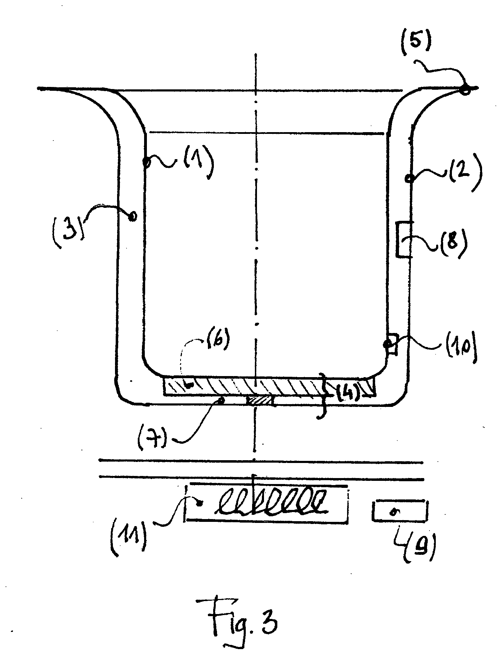

Fig. 3 zeigt schematisch ein erfindungsgemässes Kochgeschirr mit integrierter Elektronik und Sensoreinheit für eine temperaturgeführte Regelung eines Kochsystems mit Induktion als Wärmequelle. Beide zuvor beschriebenen Versionen des erfindungsgemässen Kochgeschirrs eignen sich für eine temperaturgeführte Regelung des Kochprozesses. In der Geschirrwandung des Kochgeschirrs ist eine für die Regelung benötigte Elektronik 8 angebracht, vorzugsweise an der kälteren Aussenwand. Ein Temperaturfühler 10 ist direkt mit dem Innenrumpf 1 verbunden, um die tatsächliche Temperatur des Kochgutes, resp. des Wassers usw., so optimal wie möglich zu erfassen. In der Regel handelt es sich dabei um handelsübliche Temperatursensoren wie Pt-Widerstände, Thermoelemente usw., die Ihre Messwerte an die Elektronik 8 in der Doppelwand abgeben und diese dann drahtlos an eine Elektronik 9 des Kochfeldes, weiterleiten. Die für die Messung, Auswertung und Sendung des Signals benötigte Energie liefert bei einem Induktionskochfeld 11 eine Mikrospule.

Dank der Regelung ist das Kochen, insbesondere während der Fortkochphase, maximal energieeffizient. Dem Kochgeschirr wird gerade so viel Wärme zugeführt, wie es an die Umgebung abgibt, ohne dass die Temperatur des Kochgeschirrinhalts sinkt. Hierbei sieht man deutlich, welchen Vorteil die Regelung des Kochprozesses mit sich bringt.

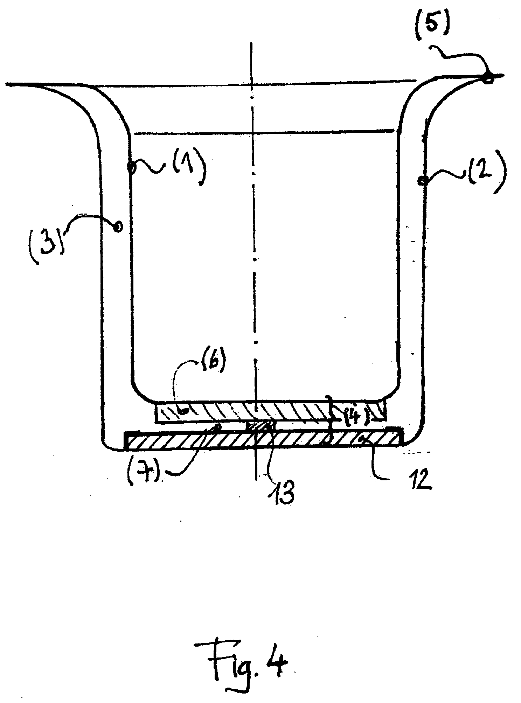

Bei der in Fig. 4 gezeigten Ausführungsform ist der Aussenrumpf 2 mit einer Ausnehmung versehen, in die eine zusätzliche untere Bodenscheibe 12 eingesetzt ist. Diese Bodenscheibe ist mit dem Aussenrumpf vakuumdicht verbunden, beispielsweise mittels einer Dichtung aus Silikonkautschuk. Diese zusätzliche Bodenscheibe wird nach dem Tiefziehen eingesetzt. Als Material für diese Bodenscheibe kommen Materialien mit einem hohen spezifischen elektrischen Widerstand infrage, d.h. beispielsweise Keramiken und ihre Komposite, Glaskeramik, Glas, Kunststoffe etc.

Auf einem Induktionskochfeld kann sich bei dieser Konstruktion das elektrische Feld im Bodenbereich des Aussenrumpfes nicht schliessen, so dass ein Erhitzen des Aussenrumpfes unterbleibt.

Wenn die untere Bodenscheibe bevorzugt aus einem Material mit hoher IR-Lichtdurchlässigkeit besteht, kann das Kochgeschirr auch mit Strahlungsheizung eingesetzt werden. Durch die geringe Absorption in der unteren Bodenscheibe wird diese nur geringfügig erwärmt, während der Hauptanteil der Ir-Strahlung in der oberen Bodenplatte 6 in Wärme umgewandelt wird, die unmittelbar an das Kochgut abgegeben wird.

Als ein IR-Licht durchlässiges Material ist vorzugsweise die Glaskeramik mit hoher Durchlässigkeit zu nennen. Dieses Material besitzt zusätzlich eine relativ hohe Festigkeit, eine hohe Temperaturbeständigkeit und sehr hohe Temperaturschockbeständigkeit. Damit können viele Anforderungen, die an das Kochgeschirr gestellt werden, erfüllt werden.

Zwischen der oberen und der unteren Bodenplatte sind Abstandshalter 13 vorgesehen. Diese dienen dazu, dass sich die beiden Bodenplatten berühren, damit die Wirkung des Vakuums, für das Zusammenhalten des Bodens besteht. Die Abstandshalter können beispielsweise aus Noppen bestehen, die auf der Oberfläche der unteren Bodenplatte ausgebildet sind.
Die Dimensionen eines typischen Bodenaufbaus sind wie folgt: Für die obere Bodenplatte 6 würde zur Erwärmung mittels Induktion an sich eine Dicke von 0,5 mm genügen. Vorzugsweise wird aber eine Dicke von 2 - 3 mm vorgesehen. Für die untere Bodenplatte 12 ist ebenfall vorzugsweise eine Dicke von 3 mm geeignet. Der Abstand zwischen den beiden Bodenplatten beträgt5 vorzugsweise 1 mm. Abweichungen von diesen Massen sind aber jederzeit möglich.

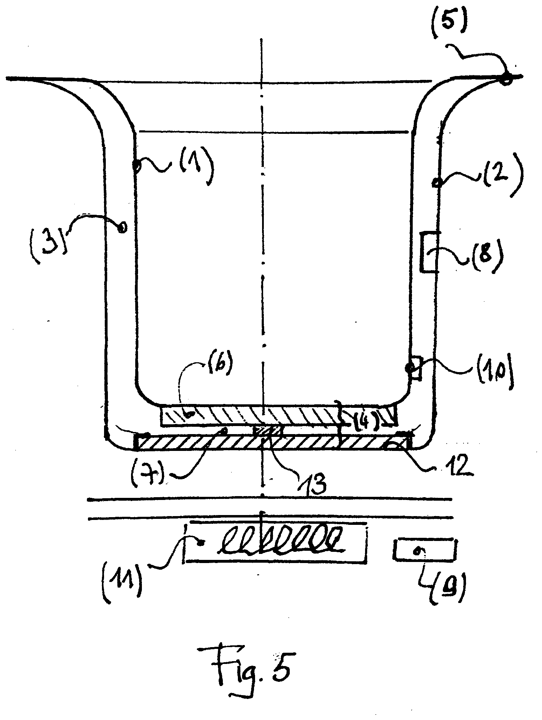

Die in Fig. 5 gezeigte Ausführungsform besitzt ebenfalls eine in einer Ausnehmung des Aussenrumpfes eingesetzte untere Bodenscheibe 12 und ist mit den Regelelementen der in Fig. 3 gezeigten Ausführungsform versehen.

Die beiden Rümpfe, können auch mehrschichtig ausgebildet sein, wobei die Schichten vorzugsweise aus verschiedenen Materialien bestehen. Die Schichten müssen nicht stoffschlüssig miteinander verbunden sein.

Wenn der Innenrumpf kochgutseitig aus einer Schicht aus Edelstahl besteht und vakuumseitig eine zusätzliche Schicht aus einem gut wärmeleitenden Material, z.B. Aluminium, besitzt, hat das die Wirkung einer verbesserten radialen Wärmeverteilung im Bodenbereich und eine geringere Wärmeabstrahlung im Wandbereich nach aussen, d.h. in Richtung des Vakuums bzw. des Aussenrumpfes.

Auch beim Aussenrumpf ist eine zusätzliche vakuumseitige Schicht aus einem gut wärmeleitenden Material vorteilhaft, weil durch deren abschirmende Wirkung die Erwärmung der austenitischen Aussenschicht verhindert bzw. verringert wird. Insbesondere im Bereich der Krümmung zwischen Boden und Wandbereich wird dadurch beim Induktionskochen eine zu starke Aufheizung vermieden.

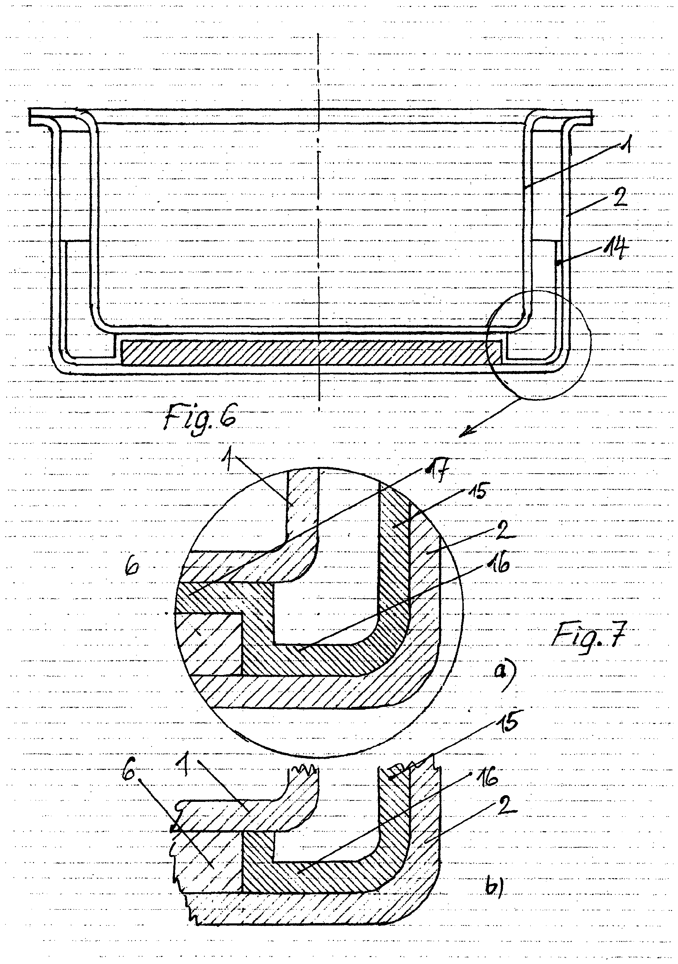

Ein entsprechendes Ausführungsbeispiel ist in den Fig. 6 und 7 gezeigt. Zusätzlich zu den bisher beschriebenen Elementen ist zwischen Innen und Aussenrumpf eine elektromagnetische Abschirmung 14 vorgesehen. Diese Abschirmung besteht vorzugsweise aus Aluminium. Andere Materialien mit gleichen oder ähnlichen Eigenschaften wie Aluminium, können ebenfalls verwendet werden.

Die Abschirmung besitzt wie die beiden Rümpfe ebenfalls eine Topfform mit Boden- und Wandbereich. Allerdings erstreckt sich der zylindrische Wandbereich 15 der Abschirmung nur über einen Teil, beispielsweise die Hälfte, der gesamten Topfhöhe. Der Bodenbereich ist beim vorliegenden Ausführungsbeispiel so geformt, dass er einen äusseren, ringförmigen Bereich 16 aufweist, der am Aussenrumpf anliegt, und einen inneren, der Bodenplatte 6 entsprechenden ebenen Bodenbereich 17, der so eingezogen ist, dass er die Bodenplatte 6 umfasst und sich sein ebener Bereich zwischen Innenrumpf und Bodenplatte befindet.

Die wichtigste Aufgabe der Abschirmung ist die Wirkung des elektromagnetischen Feldes auszuschalten, um den Aussenrumpf in dem Bereich zwischen seinem Boden und seinem senkrechten Teil nicht zu erhitzen. Das Vakuum im Zwischenraum, also in dem Raum zwischen den beiden Topfrümpfen hat einen unendlich grossen elektrischen Widerstand so dass sich das elektromagnetische Feld schliesst und alles, was sich im Feld befindet, erhitzt (Joule' sche Wärme). Diese Wärmemenge kann sehr schlecht an den Innentopf weitergeleitet werden und es kann zu sehr hohen Temperaturen und zu Beschädigungen des Kochgeschirrs kommen. Dies wird durch die an der Innenfläche des Aussenrumpfes befindliche Abschirmung vermieden.

Eine wichtige Voraussetzung dabei ist es, dass die beiden Teile im Kontakt sind. Es darf kein nennenswerter Spalt zwischen Aussenrumpf und Abschirmung bestehen. Sonst würde sich der Aussenrumpf erhitzen, wie als wäre die Abschirmung gar nicht vorhanden.

Die elektromagnetische Abschirmung kann, wie in Fig. 7b gezeigt, auch ohne den Bodenbereich 16, d.h. also ringförmig, ausgeführt werden. Da aber das Wirken des elektromagnetischen Feldes im Kochgeschirr-Inneren unerwünscht ist, ist die Version mit Bodenteil vorzuziehen. Ein direkter "Kontakt" zwischen dem elektromagnetischem Feld und dem Kochgut sollte vermieden werden. Gestaltet man die Abschirmung ohne den Boden, dann sind andere an sich bekannte Massnahmen möglich, um die Ausbreitung des elektromagnetischen Feldes im Kochgeschirrinneren zu verhindern.

Ein weiterer Vorteil der Abschirmung liegt darin, dass sie gleichzeitig als Zentrierung der Bodenplatte dient und die Bodenflächen von Aussen- u. Innenrumpf mit der Bodenplatte miteinander in vollflächigem Kontakt hält.

## Patentansprüche

1. Doppelwandiges Kochgeschirr mit einem Innenrumpf (1) und einem Aussenrumpf (2), die mit einem Abstand ineinander angeordnet sind und einen flachen Bodenbereich und einen Wandbereich aufweisen, und mit einer im Bodenbereich zwischen den beiden Rümpfen angeordneten Bodenplatte (6) wobei die beiden Rümpfe vakuumdicht miteinander verbunden sind und zwischen ihnen ein Vakuum besteht, **dadurch gekennzeichnet, dass** sich die Bodenplatte ohne stoffschlüssige Verbindung in Berührung mit den Bodenbereichen von Innenrumpf und Aussenrumpf befindet.

2. Kochgeschirr nach Anspruch 1, **dadurch gekennzeichnet, dass** die Bodenplatte (6) mehrschichtig ist.

3. Kochgeschirr nach Anspruch 1, **dadurch gekennzeichnet, dass** zwischen der Bodenplatte (6) und dem Bodenbereich des Aussenrumpfes (2) ein Abstand besteht.

4. Kochgeschirr nach Anspruch 1, **dadurch gekennzeichnet, dass** der Bodenbereich des Aussenrumpfes (2) eine Ausnehmung aufweist, in die eine zusätzliche Bodenplatte (12) vakuumdicht eingesetzt ist.

5. Kochgeschirr nach Anspruch 4, **dadurch gekennzeichnet, dass** die zusätzliche Bodenplatte (12) aus einem Material mit hohem spezifischem elektrischen Widerstand besteht.

6. Kochgeschirr nach Anspruch 1, **dadurch gekennzeichnet, dass** im Wandbereich ein Temperaturfühler (10) und eine Übermittlungseinrichtung zur Übermittlung eines Temperatursignals an eine Regeleinrichtung der Wärmequelle angeordnet ist.

7. Kochgeschirr nach Anspruch 1, **dadurch gekennzeichnet, dass** einer der beiden oder beide Rümpfe (1,2) mehrschichtig ausgebildet ist bzw. sind.

8. Kochgeschirr nach Anspruch 7, **dadurch gekennzeichnet, dass** die vakuumseitigen Schichten aus einem gut wärmeleitenden Material bestehen.

9. Verfahren zur Herstellung eines Kochgeschirrs nach einem der vorangehenden Ansprüche, **dadurch gekennzeichnet, dass** der Zusammenbau der Rümpfe (1,2) und der Bodenplatten (6,12) in einer Vakuumkammer erfolgt.

10. Verfahren zur Herstellung eines Kochgeschirrs nach einem der Ansprüche 1-7, **dadurch gekennzeichnet, dass** nach dem Zusammenbau der Rümpfe (1,2) und der Bodenplatten (6,12) in den Zwischenräumen ein Vakuum erzeugt wird.

## Claims

1. Double-walled cookware with an inner hull (1) and an outer hull (2), which are arranged with a distance in each other and have a flat bottom area and a wall area, and with a bottom plate (6) arranged in the bottom area between the two hulls wherein the two hulls are vacuum-tightly connected to each other and there is a vacuum between them, **characterized in that** the bottom plate is in contact with the bottom areas of the inner hull and the outer hull without a material-locking connection.

2. Cookware according to claim 1, **characterized in that** the bottom plate (6) is multi-layered.

3. Cookware according to claim 1, **characterized in that** there is a distance between the bottom plate (6) and the bottom area of the outer hull (2).

4. Cookware according to claim 1, **characterized in that** the bottom area of the outer hull (2) has a recess, in which an additional bottom plate (12) is inserted vacuum-tight.

5. Cookware according to claim 4, **characterized in that** the additional bottom plate (12) consists of a material with high specific electrical resistance.

6. Cookware according to claim 1, **characterized in that** in the wall area a temperature sensor (10) and a transmission device for transmitting a temperature signal to a control device of the heat source are arranged.

7. Cookware according to claim 1, **characterized in that** one of the two or both hulls (1,2) is or are multilayered.

8. Cookware according to claim 7, **characterized in that** the vacuum-side layers consist of a well heat-conducting material.

9. Method for the preparation of a cookware according to one of the preceding claims, **characterized in that** the assembly of the hulls (1,2) and the bottom plates (6,12) takes place in a vacuum chamber.

10. Method for the preparation of a cookware according to one of claims 1-7, **characterized in that** after assembly of the hulls (1,2) and the bottom plates (6,12) a vacuum is generated in the intermediate spaces.

## Revendications

1. Récipient de cuisson à double paroi avec une coque intérieure (1) et une coque extérieure (2) disposées les unes dans les autres avec une partie de fond plat et une partie de paroi, et d'une plaque de fond (6) disposée dans la partie du fond entre les deux coques, les deux coques étant reliées étanche au vide et présentant un vide entre elles, **caractérisées par le fait que** la plaque de fond est en contact avec les parties de fond de la coque intérieure et de la coque extérieure, sans liaison de matière.

2. Récipient de cuisson selon la revendication 1, **caractérisés par le fait que** la plaque de fond (6) est multicouche.

3. Récipient de cuisson selon la revendication 1, **caractérisés par** une distance entre la plaque de fond (6) et la partie du fond de la coque extérieure (2).

4. Récipient de cuisson selon la revendication 1, **caractérisés par le fait que** la partie du fond de la coque extérieure (2) présente une surface dans laquelle une plaque de fond (12) supplémentaire est insérée sous vide.

5. Récipient de cuisson selon la revendication 4, **caractérisés par le fait que** la plaque supplémentaire (12) est constituée d'un matériau à forte résistance électrique spécifique.

6. Récipient de cuisson selon la revendication 1, **caractérisés par le fait qu'**un capteur de température (10) et un dispositif de transmission pour transmettre un signal de température à un dispositif de commande de la source de chaleur sont installés dans la partie de paroi.

7. Récipient de cuisson selon la revendication 1, **caractérisés par le fait que** l'une ou les deux coques (1,2) est ou sont formée(s) à plusieurs couches.

8. Récipient de cuisson selon la revendication 7, **caractérisés par le fait que** les couches du côté du vide sont constituées d'un matériau de bonne conductivité thermique.

9. Procédé de fabrication d'un récipient de cuisson selon l'une des revendications précédentes, **caractérisé par le fait que** l'assemblage des coques (1,2) et des plaques de fond (6,12) est effectué dans une chambre à vide.

10. Procédé de fabrication d'un récipient de cuisson selon l'une des revendications 1-7, **caractérisé par le fait que** après l'assemblage des coques (1,2) et des plaques de fond (6,12) un vide est produit dans les interstices.
